# EUROPEAN PATENT SPECIFICATION

(11) **EP 0 466 513 B1**
(45) Date of publication and mention of the grant of the patent: **20.11.1996**
(21) Application number: 91306361.6
(22) Date of filing: 12.07.1991
(51) Int. Cl.: B32B 11/08, F16F 9/30

(54) **Damping material**
Dämpfmaterial
Matériau amortisseur

(30) Priority: 12.07.1990 JP 184695/90
(43) Date of publication of application: 15.01.1992
(73) Proprietor: NIHON SEKISO KOGYO KABUSHIKI KAISHA, Nagoya-shi, Aichi-ken (JP)
(72) Inventor: Kudo, Takashi c/o Nihon Sekiso Kogyo Kabushiki K., Okazaki-shi, Aichi-ken (JP)
(74) Representative: Cresswell, Thomas Anthony

(56) References cited:
- GB-A- 986 632
- GB-A- 1 000 830
- GB-A- 1 028 884
- GB-A- 1 088 671
- GB-A- 1 451 707
- US-A- 2 139 882

## Description

The present invention relates to a damper, and more particularly, the invention relates to an improvement in a damper for use with an automobile body.

An automobile body portion such as a wheel house is generally provided with a damper which comprises a damping sheet covered with a steel cover plate. For this type of damper, the following dampers have been long used.
1) A damper comprising a damping sheet member formed of a bituminous material and a steel cover plate bonded to the sheet member with adhesive.
2) A damper comprising a damping sheet member formed of a foamed bituminous material and a steel cover plate bonded to the sheet member with adhesive.

In these dampers, to obtain a desired damping performance, the thickness of the sheet member is adjusted to 1.0 mm to 5.0 mm and the thickness of the steel cover plate is adjusted to 0.4 mm to 1.0 mm.

A problem usually associated with the prior art damper is that the thickness of the sheet member has to be considerably increased to obtain a desired damping performance of the damper.

Another problem usually associated with the prior art damper is that the damping performance of the damper is maximized at a temperature above 60°C since the sheet member is hardened to enhance the heat-resistivity of the damper. The damping performance of such a damper generally has to be maximised at room temperature of 20°C to 40°C.

GB 1451707 discloses a noise reducing material for application to the surface of a machine component that is prone to vibrate. The material consists of a laminate of a metallic sheet to which is bonded on each face of the sheet a layer of substantially non-porous reinforced plastic material.

GB 1088671 discloses a sound-deadening material in sheet form which is capable of bonding to metal panels of car bodies and which comprises an intimate mixture of bitumen, hydrocarbon rubber and filler.

It is an object of the invention to provide a damper in which the damping performance can be increased without considerably increasing the thickness of the sheet member.

It is another object of the invention to provide a damper in which the damping performance of the damper is maximized at room temperature of 20°C to 40°C.

According to the present invention, there is provided a damper to be mounted on a vibrational member such as an automobile body which damper consists of:
a damping sheet member which is a bitumen sheet formed of at least one of straight asphalt, blown asphalt and semiblown asphalt and which optionally comprises an inorganic filler selected from calcium carbonate, mica and ballooned granular glass or an organic filler selected from polyethylene, polyamide and polyester;
a rubber coating layer consisting of a styrene-butadiene, polybutene or butyl rubber provided on said sheet member, said rubber coating layer having a loss factor value from 0.5 to 1.2 at a second resonance frequency (130-160 Hz) determined in accordance with JASO M329, said loss factor being at a maximum at a temperature between 10°C and 40°C; and
a steel cover plate provided on said sheet member so that said rubber coating layer is sandwiched therebetween.

The said sheet member, said rubber coating layer and said steel cover plate generally have a thickness of from 1.0 mm to 3.0 mm, a thickness of from 0.1 mm to 1.0 mm and a thickness of from 0.4 mm to 0.8 mm respectively.

In one embodiment of the invention, the asphalt comprises a foaming agent so that the thickness of the sheet member is increased at an expansion ratio of 1.2 to 3.0 when the sheet member is heated.

In the damper of the invention, the damping sheet member, the rubber coating layer and the steel cover plate cooperate to exhibit enhanced damping performance. The rubber coating layer is formed of a material having a large loss factor value to effectively contribute to enhancement of the damping performance of the damper.

An important feature of the present invention is that the damping performance of the damper is enhanced remarkably by the rubber coating layer. This offers the advantage that the desired damping performance can be obtained without considerably increasing the thickness of the damping sheet member. Also, since the damping performance is sufficiently great, the desired damping performance is maintained even if the thickness of the steel cover plate is decreased. These features may lead to a lightweight damper.

Another feature of the present invention is that the loss factor of the rubber coating layer is maximized at a temperature of 10°C to 40°C. This offers the advantage that the damping performance of the damper is maximized at a temperature of 10°C to 40°C.

The invention also provides a damper mounted on a vibrational member, for example an automobile body.
FIG. 1 is a sectional view of a damper according to a first embodiment of the present invention which is mounted on a wheel house of an automobile body;
FIG. 2 is a perspective view of the damper;
FIG. 3 is a sectional view of a sheet member and a steel cover plate;
FIG. 4 is a sectional view of the sheet member provided with a rubber coating layer;
FIG. 5 is a sectional view of the damper;
FIG. 6 is a partially sectional view of a sheet member constituting a damper according to a second embodiment of the present invention;
FIG. 7 is a partially sectional view of the damper provided with a rubber coating layer and of the steel cover plate;
FIG. 8 is a partially sectional view of the damper;
FIG. 9 is an enlarged partially sectional view of the damper mounted on a wheel house;
FIG. 10 is a sectional view of a first damper model;
FIG. 11 is a sectional view of a test piece having the damper model;
FIG. 12 is a sectional view of a control damper model;
FIG. 13 is a sectional view of a control test piece;
FIG. 14 is a sectional view of a second damper model;
FIG. 15 is a sectional view of a test piece having the damper model;
FIG. 16 is a sectional view of a third damper model;
FIG. 17 is a sectional view of a test piece having the damper model;
FIG. 18 is a sectional view of a fourth damper model;
FIG. 19 is a sectional view of a test piece having the damper model;
FIG. 20 is a sectional view of a control damper model;
FIG. 21 is a sectional view of a control test piece; and
FIG. 22 is a graph showing the relation between net loss factor values and temperature in the fourth damper model and in the control damper model.

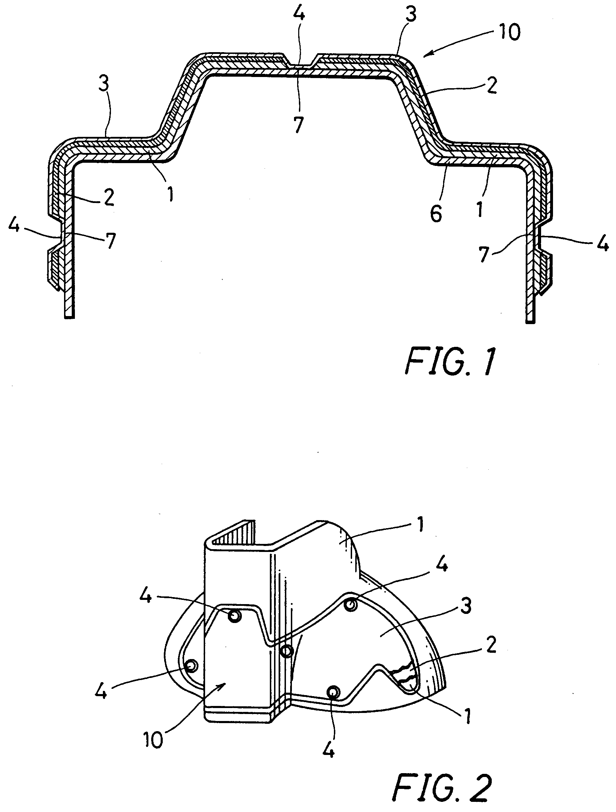

Referring to FIGS. 1 to 5, shown therein is a damper 10 for use with the wheel house 6 according to a first embodiment of the present invention. The damper 10 comprises a sheet member 1 which is formed of a bitumen sheet and is configured to the configuration of the wheel house 6, a rubber coating layer 2 formed on the sheet member 1, and a steel cover plate 3 provided on the rubber coating layer 2.

The bitumen sheet has a thickness of 3 mm and is formed of straight asphalt which contains a desired amount of filler. The filler is a member selected from inorganic materials selected from calcium carbonate, mica and ballooned granular glass or organic materials selected from as polyethylene, polyamide and polyester.

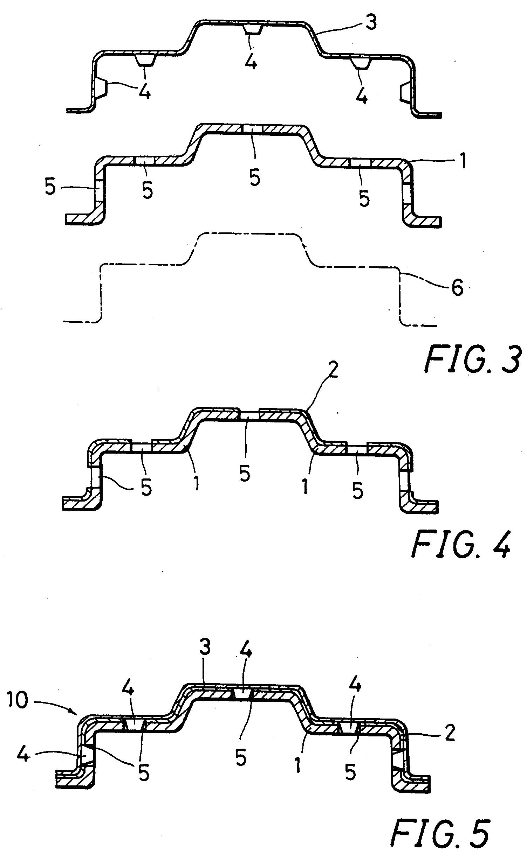

As best shown in FIG. 2, the sheet member 1 is formed of the bitumen sheet as described above and is configured to conform to the configuration of the wheel house 6. As shown in FIG. 3, the sheet member 1 has a desired number of through holes 5.

As shown in FIGS. 4 and 5, the rubber coating layer 2 is formed on the sheet member 1 and has a thickness of 0.4 mm. The rubber coating layer 2 is formed of a rubber material. The rubber material is a styrene-butadiene block copolymer having a loss factor value or a loss tangent value of 1.2 at a temperature of 12°C. An example of this type of rubber materials is produced by Japan Synthetic Rubber Industries, Inc. under the name "Dynaflex LS9003C".

As shown in FIGS. 2 and 3, the steel cover plate 3 is formed of a steel plate made by stamping and having a thickness of 0.4 mm and is configured substantially to conform to the configuration of a desired area of the sheet member 1. The steel cover plate 3 is formed with a plurality of depressed welding spots 4 which are positioned so as to correspond to the through holes 5 when the cover plate 3 is fitted on the sheet member 1.

As shown in FIG. 5, the sheet member 1 provided with the rubber coating layer 2 is fitted with the cover plate 3 so that all the welding spots 4 are completely engaged with the through holes 5 of the sheet member 1, thereby permitting formation of a damper 10. As will be easily understood, the cover plate 3 is provisionally integrated with the sheet member 1 by desired means such as clamps. Further, the weight of the damper 10 is 7.9 kg per square meter.

Thereafter, as shown in FIG. 1, the damper 10 of this embodiment is fitted to the wheel house 6 and is welded thereto at the welding spots 4. Further, the wheel house 6 used in this embodiment is not the real wheel house of the automobile but a wheel house model. The numerals 7 in FIG. 1 designate welding areas. The damper 10 disposed on the wheel house 6 is heated at 140°C for 30 minutes using heat treatment equipment and is cooled to the room temperature. The heat treatment effectively softens or melts the sheet member 1 and rubber coating layer 2, thereby bonding closely the cover plate 3, the rubber coating layer 2, the sheet member 1 and the wheel house 6.

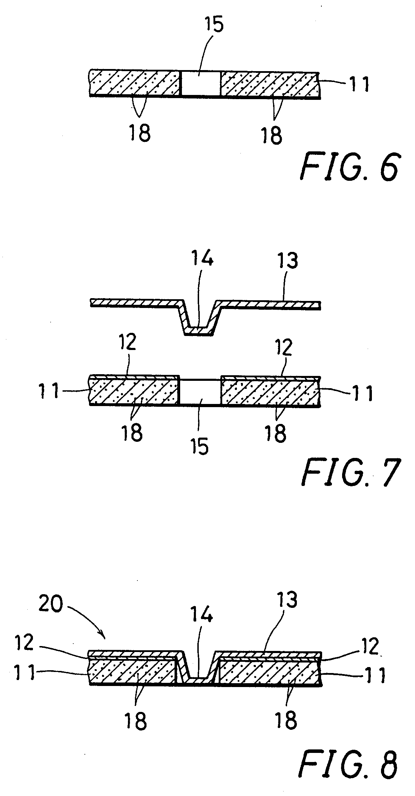

Referring to FIGS. 6 to 9, shown therein is a damper 20 for use with the wheel house 6 according to a second embodiment of the present invention. The damper 20 comprises a sheet member 11 which is formed of a foamable bitumen sheet and is configured to the configuration of the wheel house 6, a rubber coating layer 12 formed on the sheet member 11, and a steel cover plate 13 provided on the rubber coating layer 12.

The foamable bitumen sheet is formed of foamable straight asphalt which contains a desired amount of filler and has a thickness of 1.3 mm. The foamable straight asphalt is prepared by blending one hundred parts of straight asphalt and a desired amount of filler with two parts of azodicarbonamide and two parts of urea as a foaming agent. The foamable straight asphalt as prepared has an expansion ratio of 1.2.

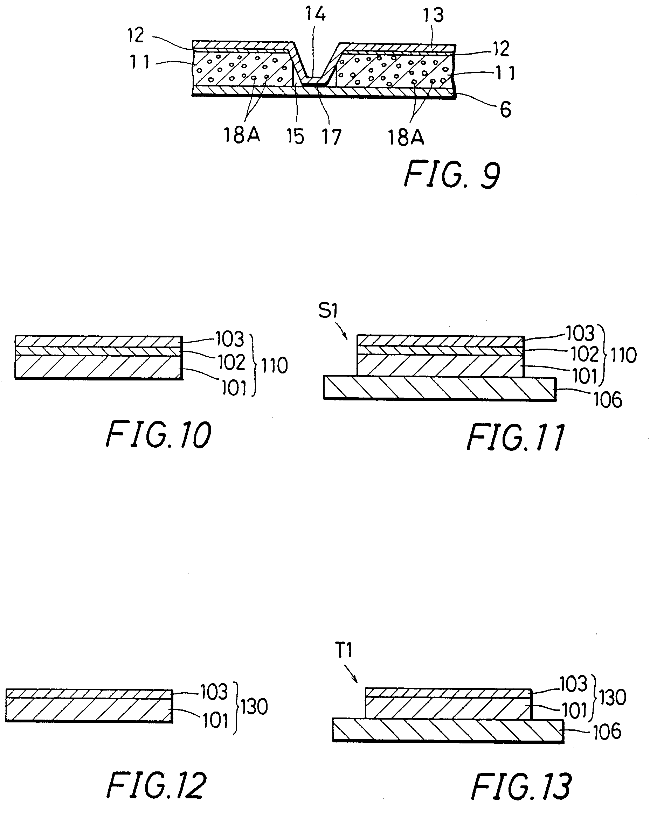

The sheet member 11 is formed of the foamable straight asphalt sheet as described above and is configured to conform to the configuration of the wheel house 6. As shown in FIG. 6 for example, the sheet member 11 contains foaming agent 18 which produces bubbles 18A (FIG. 9) by heating treatment to increase the bulk of the sheet member 11. Further, as shown in FIG. 6, the sheet member 11 has a desired number of through holes 15.

As shown in FIG. 7, the rubber coating layer 12 is formed on the sheet member 11 and has a thickness of 0.4 mm. The rubber coating layer 12 is formed of a rubber material having a maximum loss factor value of 1.2 at a temperature of 12°C.

As shown in FIGS. 7 and 8, the steel cover plate 13 is formed of the steel plate made by stamping and having a thickness of 0.4 mm and is configured substantially to conform to the configuration of a desired area of the sheet member 11. The steel cover plate 13 is formed with a plurality of depressed welding spots 14 which are positioned so as to correspond to the through holes 15 when the cover plate 13 is fitted on the sheet member 11.

As in the first embodiment, the sheet member 11 provided with the rubber coating layer 12 is fitted with the cover plate 13 so that all the welding spots 14 are engaged completely with the through holes 15 of the sheet member 11, thereby permitting formation of a damper 20 (FIG. 8). As will be easily understood, the cover plate 13 is provisionally integrated with the sheet member 11 by desired means such as clamps. Further, the weight of the damper 20 is 5.6 kg per square meter.

Thereafter, as shown in FIG. 9, the damper 20 of this embodiment is fitted to the wheel house 6 and is welded thereto at the welding spots 14. The numerals 17 in FIG. 9 designate welding areas. The damper 20 disposed on the wheel house 6 is heated at 140°C for 30 minutes using heat treatment equipment and is cooled to the room temperature. The heat treatment effectively softens or melts the sheet member 11 and rubber coating layer 12, thereby bonding closely the cover plate 13, the rubber coating layer 12, the sheet member 11 and the wheel house 6. Further, the heat treatment permits production of the bubbles 18A, thereby increasing the thickness of the sheet member 11 from 1.3 mm to 1.5 mm.

The following Examples illustrate the invention.

### Example 1

A bitumen sheet, a first rubber material, a steel plate and a thicker steel plate were provided. The bitumen sheet had a thickness of 3 mm and was formed of straight asphalt which contained a desired amount of filler. The filler was a member selected from inorganic materials such as calcium carbonate, mica and ballooned granular glass and organic materials such as polyethylene, polyamide and polyester. The bitumen sheet was cut to form a plurality of strip-like sheet members having a width of 10 mm and a length of 200 mm. The rubber material was a styrene-butadiene block copolymer having a loss factor value of 1.2 at a temperature of 10°C. The steel plate had a thickness of 0.4 mm. The steel plate was cut to form a plurality of strip-like steel cover plates having a width of 10 mm and length of 200 mm. The thicker steel plate had a thickness of 1.6 mm. The steel plate was cut to form a plurality of strip-like substrates having a width of 10 mm and a length of 200 mm.

As shown in FIG. 10, four of the sheet members 101 were coated with the rubber material to form the rubber coating layers 102 thereon. The thickness of the rubber coating layers was adjusted to 0.1 mm, 0.2 mm, 0.3 mm and 0.4 mm. Subsequently, the steel cover plates 103 were laminated on the rubber coating layers 102 of the sheet members 101 to form four types of damper models 110. Thereafter, as shown in FIG. 11, these damper models 110 were disposed on the substrates 106 and were heated at 140°C for 30 minutes using heat treatment equipment to form four test pieces S1.

As shown in FIG. 12, one of the sheet members 101 was laminated with the steel cover plate 103 to form a damper model 130 for control. As shown in FIG. 13, the damper model 130 was disposed on the substrate 106 and was heated at 140°C for 30 minutes using heat treatment equipment to form a test piece T1 for control.

The loss factor values of the damper models 110, 130 in the test pieces S1, T1 at a second resonance frequency (130Hz - 160Hz) were determined and recorded. The procedure used may be found in Japanese Automobile Standards Organization (JASO) M329. The determined loss factor values are presented in the following Table 1:

**TABLE 1**

| LOSS FACTOR VALUES OF DAMPER MODELS | | | | |
|---|---|---|---|---|
| Test Pieces | Thickness of Rubber Layer (mm) | Temperature | | |
| | | 20°C | 40°C | 60°C |
| S1 | 0.1 | 0.14 | 0.18 | 0.13 |
| | 0.2 | 0.23 | 0.20 | 0.11 |
| | 0.3 | 0.30 | 0.21 | 0.07 |
| | 0.4 | 0.50 | 0.19 | 0.06 |
| T1(Control) | 0 | 0.06 | 0.13 | 0.19 |

From the foregoing data, it can be seen that the loss factor of the test pieces S1 (the damper models 110) at 20°C and 40°C is greater than that of the control test piece T1.

### Example 2

Sheet members, steel cover plates and substrates were prepared in the same manner as Example 1. Four kinds of rubber materials were provided. For purposes of illustration, these rubber materials will be referred to as second, third, fourth and fifth rubber materials respectively. The second to fifth rubber materials provided a maximum loss factor value of 1.2 at 12°C, 23°C, 30°C and 40°C, respectively.

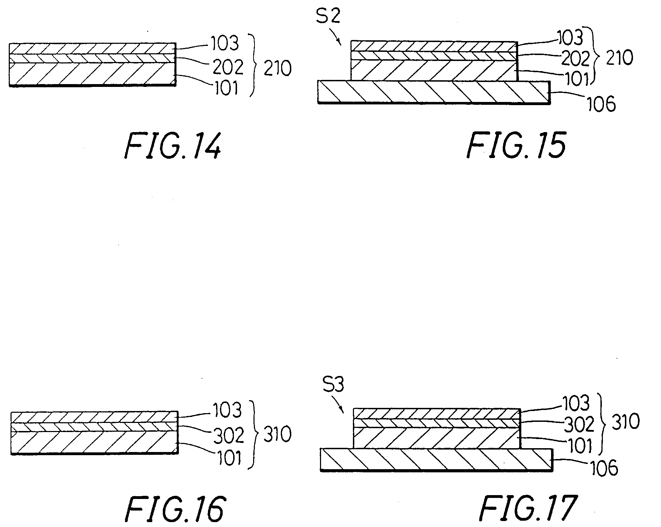

As shown in FIG. 14, four of the sheet members 101 were coated with the second to fifth rubber materials in this order to form the rubber coating layers 202 thereon. The thickness of the rubber coating layers was adjusted to 1 mm. Subsequently, the steel cover plates 103 were laminated on the rubber coating layers 202 of the respective sheet members 101, thereby to form four types of damper models 210.

Thereafter, as shown in FIG. 15, these damper models 210 were disposed on the substrates 106 and were heated at 140°C for 30 minutes using heat treatment equipment to form four test pieces S2.

The loss factor values of the damper models 210 in the test pieces S2 were determined at several temperatures. From these data, the temperature providing the maximum loss factor value of each of the damper models was read and recorded. The temperatures are presented in the following Table 2:

**TABLE 2**

| INTERRELATION BETWEEN THE TEMPERATURE PROVIDING MAXIMUM LOSS FACTOR VALUE OF RUBBER MATERIAL AND THE TEMPERATURE PROVIDING MAXIMUM LOSS FACTOR VALUE OF DAMPER MODEL | |
|---|---|
| Temperature Providing Maximum Loss Factor Value of Rubber Material (°C) | Temperature Providing Maximum Loss Factor Value of Damper Model (°C) |
| 12 | 20 |
| 23 | 40 |
| 30 | 50 |
| 40 | 60 |

As seen in Table 2, the temperature providing the maximum loss factor value of each of the damper models appears at a point 10-20°C greater than the temperature providing the maximum loss factor value of the rubber material. Therefore, it is possible to control the maximum loss factor value temperature of a damper by selecting a rubber material of known maximum loss factor value temperature. Since in an automobile body, such as the wheel house, the required range of maximum loss factor value temperatures of the damper is between 20°C and 40°C, it will be necessary to select a rubber material for which the maximum loss factor value is obtained at temperatures between 10°C and 20°C

### Example 3

Sheet members, steel cover plates and substrates were prepared in the same manner as Example 1. Three kinds of rubber materials were provided. These rubber materials will be referred to as sixth, seventh and eighth rubber materials respectively. The sixth rubber material was formed of polybutene including calcium carbonate and had a loss factor value of 0.98. The seventh rubber material was a hot-melt material formed of butyl rubber and had a loss factor value of 0.5. The eighth rubber material was a hot-melt material formed of vinyl ethyleneacetate and had a loss factor value of 0.3. As shown in FIG. 16, three of the sheet members 101 were coated with the sixth to eighth rubber materials in this order to form the rubber coating layers 302 thereon. The thickness of the rubber coating layers 302 was adjusted to 1 mm. Subsequently, the steel cover plates 103 were laminated on the rubber coating layers 302 of the respective sheet members 101 to form three types of damper models 310.

Thereafter, as shown in FIG. 17, these damper models 310 were disposed on substrates 106 and were heated at 140°C for 30 minutes using heat treatment equipment to form three test pieces S3.

The loss factor values of the damper models 310 in the test pieces S3 were determined at several temperatures between 20°C and 60°C. From these data, the maximum loss factor value of each of the damper models was read and recorded. The maximum loss factor values of the damper models are presented in the following Table 3:

**TABLE 3**

| INTERRELATION BETWEEN THE LOSS FACTOR VALUE OF RUBBER MATERIAL AND LOSS FACTOR VALUE OF DAMPER MODEL | |
|---|---|
| Loss Factor Value of Rubber Material | Maximum Loss Factor Value of a Damper Model at temperatures between 20°C and 60°C |
| 0.98 | 0.37 |
| 0.5 | 0.26 |
| 0.3 | 0.10 |

As seen in the Table 3, the maximum loss factor value of each of the damper models at temperatures between 20°C and 60°C increases almost proportionally to the loss factor value of the rubber material used in the damper model, that is, the rubber material having a greater loss factor value produces a damper model having an increased loss factor value. Therefore, to produce a damper which exhibits enhanced damping performance it will be necessary to select a rubber material having a greater loss factor value. Generally, a rubber material having a loss factor value greater than 0.5 (the optimum value of 0.5 - 1.2) will be selected to produce the damper for use on an automobile body.

### Example 4

A bitumen sheet formed of foamable straight asphalt which contained a desired amount of filler and having a thickness of 1.3 mm was provided. The foamable straight asphalt was prepared by blending one hundred parts of straight asphalt and a desired amount of filler with two parts of azodicarbonamide and two parts of urea as a foaming agent. The foamable straight asphalt as prepared had an expansion ratio of 1.2. The bitumen sheet was cut to form a sheet member having a width of 10 mm and a length of 200 mm. A rubber material used was the first rubber material which had a loss factor value of 1.2 at a temperature of 10°C. Steel cover plates and substrates were prepared in the same manner as Example 1.

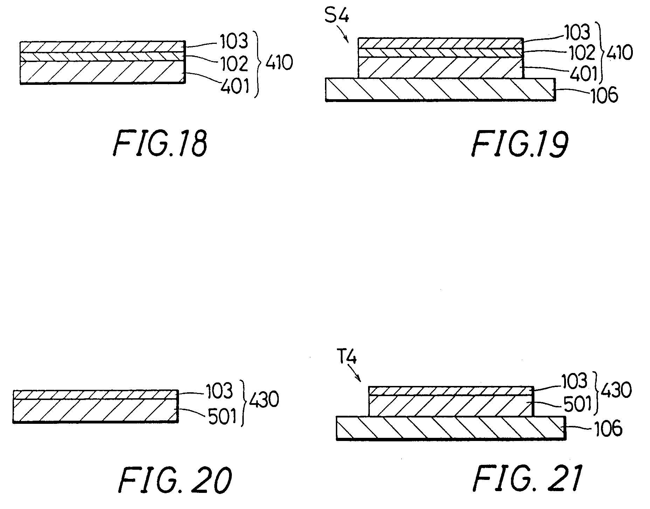

As shown in FIG. 18, the sheet member 401 was coated with the first rubber material to form the rubber coating layer 102 thereon. The thickness of the rubber coating layer 102 was adjusted to 0.4 mm. Subsequently, the steel cover plate 103 was laminated on the rubber coating layer 102 of the sheet member 401, thereby to form a damper model 410. The weight of the damper model 410 was 5.65 kg per square meter. As shown in FIG. 19, the damper model 410 was subsequently disposed on the substrates 106 and was heated at 140°C for 30 minutes using heat treatment equipment to form a test piece S4. The heat treatment permitted foaming of the foamable straight asphalt to increase the thickness of the sheet member 401 to 1.5 mm.

A bitumen sheet formed of non-foamable straight asphalt and having a thickness of 3.0 mm was also provided. The bitumen sheet was cut to form a sheet member having a width of 10 mm and a length of 200 mm.

As shown in FIG. 20, the sheet member 501 was directly laminated with the steel cover plate 103 to form a damper model 430 for use as a control. The weight of the damper model 430 was 7.18 kg per square meter. As shown in FIG. 21, the damper model 430 was subsequently disposed on a substrate 106 and heated at 140°C for 30 minutes using heat treatment equipment to form a test piece T4 for control.

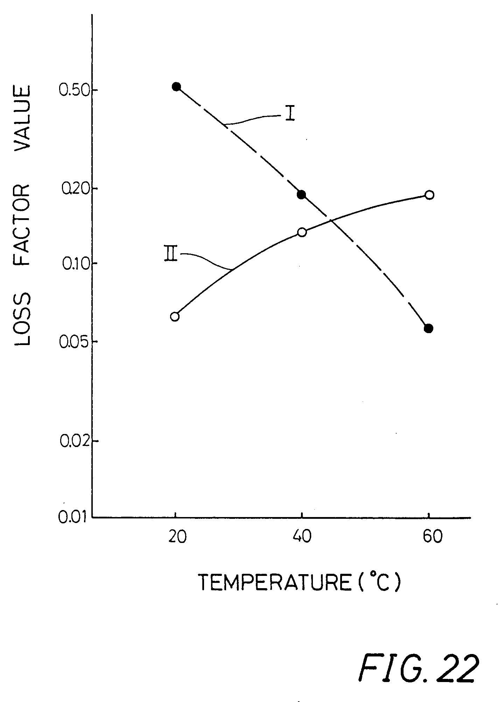

The loss factor values of the damper models 410 and 430 were determined at 20°C, 40°C and 60°C and plotted. The relationship determined loss factor values to temperature is presented in FIG. 22 wherein the lines I and II correspond to the damper models 410 and 430, respectively.

As seen in FIG. 22, in the temperature range of 20°C to 40°C, the loss factor values of the damper 410 are remarkably greater than those of the damper 430 without rubber coating layer, though the weight of the damper 410 is about 20% lighter than that of the damper 430.

## Claims

1. A damper to be mounted on a vibrational member such as an automobile body which damper consists of:
a damping sheet member which is a bitumen sheet formed of at least one of straight asphalt, blown asphalt and semiblown asphalt and which optionally comprises an inorganic filler selected from calcium carbonate, mica and ballooned granular glass or an organic filler selected from polyethylene, polyamide and polyester;
a rubber coating layer consisting of a styrene-butadiene, polybutene or butyl rubber provided on said sheet member, said rubber coating layer having a loss factor value from 0.5 to 1.2 at a second resonance frequency (130-160 Hz) determined in accordance with JASO M329, said loss factor being at a maximum at a temperature between 10°C and 40°C; and
a steel cover plate provided on said sheet member so that said rubber coating layer is sandwiched therebetween.

2. A damper according to claim 1, wherein said sheet member, said rubber coating layer and said steel cover plate have a thickness of from 1.0 mm to 3.0 mm, a thickness of from 0.1 mm to 1.0 mm and a thickness of from 0.4 mm to 0.8 mm respectively.

3. A damper according to claim 1 or 2, wherein said asphalt comprises a foaming agent so that the thickness of said sheet member is increased at an expansion ratio of 1.2 to 3.0 when said sheet member is heated.

4. A damper according to any one of claims 1 to 3 mounted on a vibrational member.

5. A damper according to claim 4, wherein the vibrational member is an automobile body.

## Patentansprüche

1. Auf ein Schwingungselement, wie einen Automobilkörper zu montierender Dämpfer, bestehend aus: einem Dämpfungsplattenelement, das eine aus einem reinen Asphalt und/oder geblasenen Asphalt und/oder halbgeblasenen Asphalt geformten Bitumenplatte ist und das optional einen anorganischen Füllstoff, ausgewählt aus Kalziumkarbonat, Mica und balloniertes Granulatglas oder einen organischen Füllstoff, ausgewählt aus Polyethylen, Polyamid und Polyester, umfaßt; einer Gummibeschichtung, bestehend aus einem Styrenbutadien, Polybuten oder Butylgummi, die auf dem Plattenelement vorgesehen ist, wobei die Gummibeschichtung einen Betriebsdämpfungswert von 0,5 bis 1,2 bei der zweiten Resonanzfrequenz (130-160 Hz), bestimmt in Übereinstimmung mit JASO M329, aufweist, und wobei die Betriebsdämpfung bei einer Temperatur zwischen 10° C und 40° C maximal ist, und
einer Stahldeckplatte, die auf dem Plattenelement derart vorgesehen ist, daß die Gummibeschichtung dazwischenliegt.

2. Dämpfer nach Anspruch 1, bei dem das Plattenelement die Gummibeschichtung und die Stahldeckplatte jeweils eine Dicke von 1,0 mm bis 3 mm, eine Dicke von 0,1 mm bis 1,0 mm und eine Dicke von 0,4mm bis 0,8 mm aufweisen.

3. Dämpfer nach Anspruch 1 oder 2, bei dem der Asphalt ein Schäummittel umfaßt, so daß die Dicke des Plattenelementes bei einem Expansionsverhältnis von 1,2 bis 3,0 erhöht wird, wenn das Plattenelement erhitzt wird.

4. Dämpfer nach einem der Ansprüche 1 bis 3, montiert auf ein Schwingungselement.

5. Dämpfer nach Anspruch 4, bei dem das Schwingungselement ein Automobilkörper ist.

## Revendications

1. Amortisseur à monter sur un élément vibrant tel qu'une carrosserie automobile, lequel amortisseur comporte :
un élément d'amortissement en feuille qui est une feuille de bitume formée d'au moins un élément parmi de l'asphalte tout simple, de l'asphalte soufflé et de l'asphalte semi-soufflé et qui, en option, comporte une charge inorganique choisie parmi le carbonate de calcium, le mica et du verre granulaire ballonné ou une charge organique choisie parmi le polyéthylène, le polyamide et le polyester,
une couche de revêtement en caoutchouc constituée d'un styrène-butadiène, de polybutène ou de caoutchouc butyle, agencée sur ledit élément en feuille, ladite couche de revêtement en caoutchouc ayant une valeur de facteur de perte de 0,5 à 1,2 pour une seconde fréquence de résonance (130 à 160 Hz) déterminée conformément à la norme JASO M329, ledit facteur de perte étant à son maximum à une température comprise entre 10°C et 40°C, et
une plaque formant couvercle en acier agencée sur ledit élément en feuille de sorte que ladite couche de revêtement en caoutchouc soit enserrée entre eux.

2. Amortisseur selon la revendication 1, dans lequel ledit élément en feuille, ladite couche de revêtement en caoutchouc et ladite plaque formant couvercle en acier ont une épaisseur allant de 1,0 à 3,0 mm, une épaisseur allant de 0,1 à 1,0 mm et une épaisseur allant de 0,4 à 0,8 mm, respectivement.

3. Amortisseur selon la revendication 1 ou 2, dans lequel ledit asphalte comporte un agent moussant de sorte que l'épaisseur dudit élément en feuille soit accrue avec un taux d'expansion de 1,2 à 3,0 lorsque ledit élément en feuille est chauffé.

4. Amortisseur selon l'une quelconque des revendications 1 à 3, monté sur un élément vibrant.

5. Amortisseur selon la revendication 4, dans lequel l'élément vibrant est une carrosserie d'automobile.
